(19) Europäisches Patentamt / European Patent Office / Office européen des brevets

(11) **EP 2 634 714 A2**

## (12) EUROPEAN PATENT APPLICATION
published in accordance with Art. 153(4) EPC

(43) Date of publication:
04.09.2013 Bulletin 2013/36

(21) Application number: 11836654.1

(22) Date of filing: 28.10.2011

(51) Int Cl.:
*G06F 19/00* (2011.01)     *G06F 9/44* (2006.01)

(86) International application number:
PCT/KR2011/008123

(87) International publication number:
WO 2012/057562 (03.05.2012 Gazette 2012/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.10.2010 KR 20100106317

(71) Applicant: Acriil Inc.
Gangnam-gu, Seoul 135-816 (KR)

(72) Inventors:
• PARK, Wei Jin
Seoul 137-941 (KR)

• LEE, Se Hwa
Seoul 137-941 (KR)
• KIM, Jong Hee
Seoul 137-941 (KR)

(74) Representative: Thorniley, Peter
Kilburn & Strode LLP
20 Red Lion Street
London WC1R 4PJ (GB)

## (54) APPARATUS AND METHOD FOR EMOTIONAL AUDIO SYNTHESIS

(57) The present disclosure provides an emotional voice synthesis apparatus and an emotional voice synthesis method. The emotional voice synthesis apparatus includes a word dictionary storage unit for storing emotional words in an emotional word dictionary after classifying the emotional words into items each containing at least one of an emotion class, similarity, positive or negative valence, and sentiment strength; voice DB storage unit for storing voices in a database after classifying the voices according to at least one of emotion class, similarity, positive or negative valence and sentiment strength in correspondence to the emotional words; emotion reasoning unit for inferring an emotion matched with the emotional word dictionary with respect to at least one of each word, phrase, and sentence of document including text and e-book; and voice output unit for selecting and outputting a voice corresponding to the document from the database according to the inferred emotion.

EP 2 634 714 A2

**Description**

[Technical Field]

The present disclosure in some embodiments relates to an emotional voice synthesis apparatus and an emotional voice synthesis method. More particularly, the present disclosure relates to an emotional voice synthesis apparatus and an emotional voice synthesis method, which can output a voice signal synthesized with a user's emotion by recognizing a user's emotional state by using a probabilistic model and adaptively changing the voice signal according to the recognition result.

[Background]

The statements in this section merely provide background information related to the present disclosure and may not constitute prior art.

Recently, the Internet has become widely available and advanced up to wireless Internet, and therefore, a user can communicate with another user of a wired or wireless communication terminal, even while moving, by using not only a connected computer but also a mobile communication terminal such as a PDA (personal digital assistant), a notebook computer, a mobile phone, or a smartphone. Such wired and wireless communications can exchange voice signals or data files, and can also allow a user to converse with another user via a text message by using a messenger or can form a new online community through a variety of activities such as writing a text message or uploading an image or moving picture in his or her own blog or other communication users' blogs the user visits.

During communication activities within the community formed online, as in the offline case, it is frequently necessary to express one's own emotional state to another user or guess another user's emotional state. For this purpose, online community service providers offer various methods that can express or guess a user's emotional state. For example, a messenger-based community service provider makes it possible to display a user's emotional state through a chat window by providing a menu for selecting various emoticons corresponding to emotional states and allowing a user to select an emoticon according to his or her own emotional state. In addition, it is retrieved whether a particular word is contained in a sentence a user inputs through a chat window or a bulletin board. If the particular word is retrieved, the corresponding icon is displayed to automatically accomplish emotion expression according to the input of the sentence.

However, it is common that human emotions are not constant but changed every moment according to a situation, place, and mood. It is very cumbersome for a user to select and change an emoticon each time according to an emotion that changes depending on the situation or environment.

In addition, the emotion or feeling has very individual attributes, and psychological factors affecting human emotions may be largely divided into surprise, fear, hatred, anger, pleasure, happiness, sadness, and the like. However, the psychological factors the individuals feel may be different even in the same situation, and the strength of the expressed emotion may also be different from person to person. Nevertheless, if a particular word is retrieved from a sentence input by a user and is expressed monolithically, a relevant individual's current emotional state can not be exactly expressed.

[Disclosure]

[Technical Problem]

Therefore, the present disclosure has been made to provide an emotional voice synthesis apparatus and an emotional voice synthesis method, which can output a voice signal synthesized with a user's emotion by recognizing a user's emotional state by using a probabilistic model and adaptively changing the voice signal according to the recognition result.

[Summary]

An embodiment of the present disclosure provides an emotional voice synthesis apparatus including a word dictionary storage unit, a voice DB storage unit, an emotion reasoning unit and a voice output unit. The word dictionary storage unit is configured to store emotional words in an emotional word dictionary after classifying the emotional words into items each containing at least one of an emotion class, a similarity, a positive or negative valence and an emotional intensity or sentiment strength. The voice DB storage unit is configured to store voices in a database after classifying the voices according to at least one of the emotion class, the similarity, the positive or negative valence, and the sentiment strength in correspondence to the emotional words. The emotion reasoning unit is configured to infer an emotion matched with the emotional word dictionary with respect to at least one of each word, phrase, and sentence of a document including a text and an e-book. And the voice output unit is configured to select and output a voice corresponding to the document from the database according to the inferred emotion.

The voice DB storage unit may be configured to store voice prosody in the database after classifying the voice prosody according to at least one of the emotion class, the similarity, the positive or negative valence, and the sentiment strength in correspondence to the emotional words.

Another embodiment of the present disclosure provides an emotional voice synthesis apparatus including a word dictionary storage, an emotion TOBI storage unit, an emotion reasoning unit and a voice conversion unit. The word dictionary storage unit is configured to store emotional words in an emotional word dictionary after classifying the emotional words into items each containing at least one of an emotion class, a similarity, a positive or negative valence, and a sentiment strength. The emotion TOBI storage unit configured to store emotion tones and break indices (TOBI) in a database in correspondence to at least one of the emotion class, the similarity, the positive or negative valence, and the sentiment strength of the emotional words. The emotion reasoning unit configured to infer an emotion matched with the emotional word dictionary with respect to at least one of each word, phrase, and sentence of a document including a text and an e-book. And the voice conversion unit configured to convert the document into a voice signal, based on the emotion TOBI corresponding to the inferred emotion.

The voice conversion unit may be configured to predict a prosodic break by using at least one of hidden Markov models (HMM), classification and regression trees (CART), and stacked sequential learning (SSL).

Yet another embodiment of the present disclosure provides an emotional voice synthesis method, including: storing emotional words in an emotional word dictionary after classifying the emotional words into items each containing at least one of an emotion class, a similarity, a positive or negative valence, and a sentiment strength; storing voices in a database after classifying the voices according to at least one of the emotion class, the similarity, the positive or negative valence, and the sentiment strength in correspondence to the emotional words; recognizing an emotion matched with the emotional word dictionary with respect to at least one of each word, phrase, and sentence of a document including a text and an e-book; and selecting and outputting a voice corresponding to the document from the database according to the inferred emotion.

The storing of the voices in the database may include storing voice prosody in the database after classifying the voice prosody according to at least one of the emotion class, the similarity, the positive or negative valence, and the sentiment strength in correspondence to the emotional words.

Still yet another embodiment of the present disclosure provides an emotional voice synthesis method, including: storing emotional words in an emotional word dictionary after classifying the emotional words into items each containing at least one of an emotion class, a similarity, a positive or negative valence, and a sentiment strength; storing emotion tones and break indices (TOBI) in a database in correspondence to at least one of the emotion class, the similarity, the positive or negative valence, and the sentiment strength of the emotional words; recognizing an emotion matched with the emotional word dictionary with respect to at least one of each word, phrase, and sentence of a document including a text and an e-book; and converting the document into a voice signal, based on the emotion TOBI corresponding to the inferred emotion.

The converting of the document into the voice signal may include predicting a prosodic break by using at least one of hidden Markov models (HMM), classification and regression trees (CART), and stacked sequential learning (SSL).

[Advantageous Effects]

According to the present disclosure as described above, an emotional voice synthesis apparatus and an emotional voice synthesis method can output a voice signal synthesized with a user's emotion by recognizing a user's emotional state by using a probabilistic model and adaptively changing the voice signal according to the recognition result.

[Description of Drawings]

FIG. 1 is a schematic diagram of an emotional voice synthesis apparatus according to at least one embodiment of the present disclosure;

FIG. 2 is an exemplary diagram of an emotional word dictionary according to at least one embodiment of the present disclosure;

FIG. 3 is an exemplary diagram of a configuration of an emotion reasoning module of FIG. 1;

FIG. 4 is an exemplary diagram of emotion log information stored in an emotion log storage unit of FIG. 3;

FIG. 5 is a schematic diagram of an emotional voice synthesis apparatus according to another embodiment of the present disclosure;

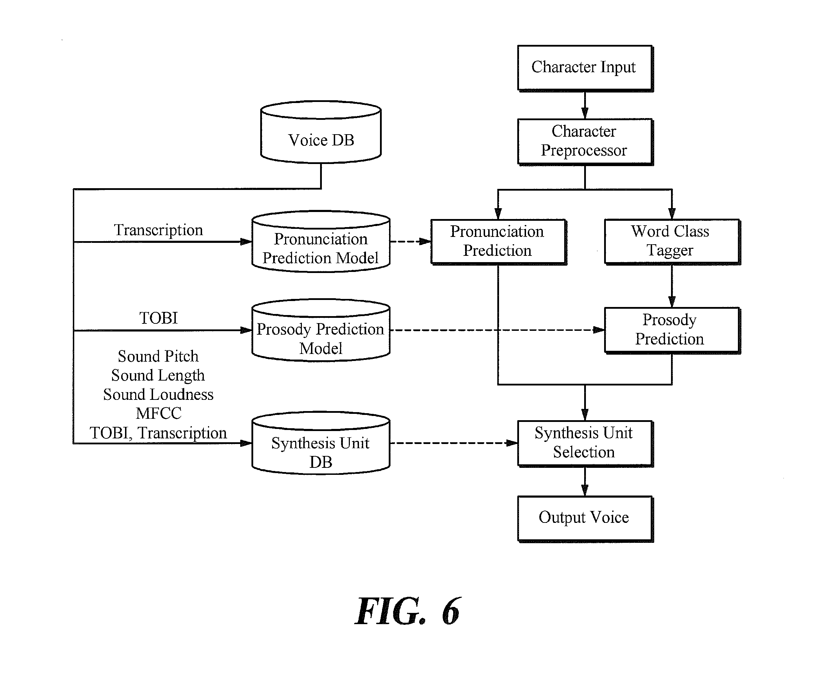

FIG. 6 is an exemplary diagram of a TTS system used in at least one embodiment of the present disclosure;

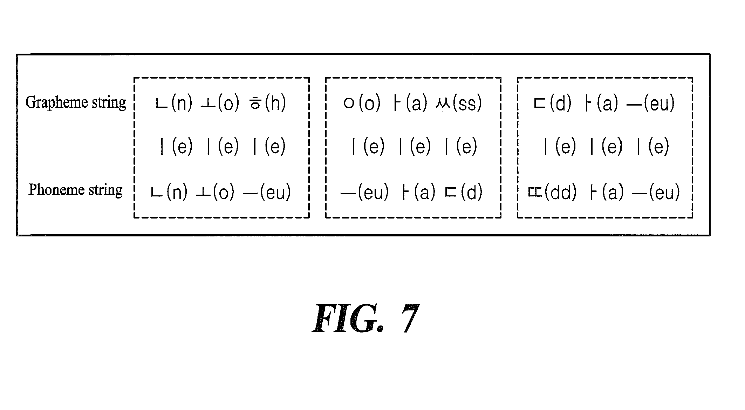

FIG. 7 is an exemplary diagram of grapheme string-phoneme string arrangement;

FIG. 8 is an exemplary diagram of a generated rule tree;

FIG. 9 is an exemplary diagram of features used for a prosodic break prediction;

FIG. 10 is an exemplary diagram of features used for a tone prediction;

FIG. 11 is a flowchart of an emotional voice synthesis method according to at least one embodiment of the present disclosure; and

FIG. 12 is a flowchart of an emotional voice synthesis method according to another embodiment of the present disclosure.

[Detailed Description]

Hereinafter, at least one embodiment of the present disclosure will be described in detail with reference to the accompanying drawings. In the following description, like reference numerals designate like elements although the elements are shown in different drawings. Further, in the following description of the at least one embodiment, a detailed description of known functions and configurations incorporated herein will be omitted for the purpose of clarity and for brevity.

Additionally, in describing the components of the present disclosure, terms like first, second, A, B, (a), and (b) are used. These are solely for the purpose of differentiating one component from another, and one of ordinary skill would understand the terms are not to imply or suggest the substances, order or sequence of the components. If a component is described as 'connected', 'coupled', or 'linked' to another component, one of ordinary skill in the art would understand the components are not necessarily directly 'connected', 'coupled', or 'linked' but also are indirectly 'connected', 'coupled', or 'linked' via a third component.

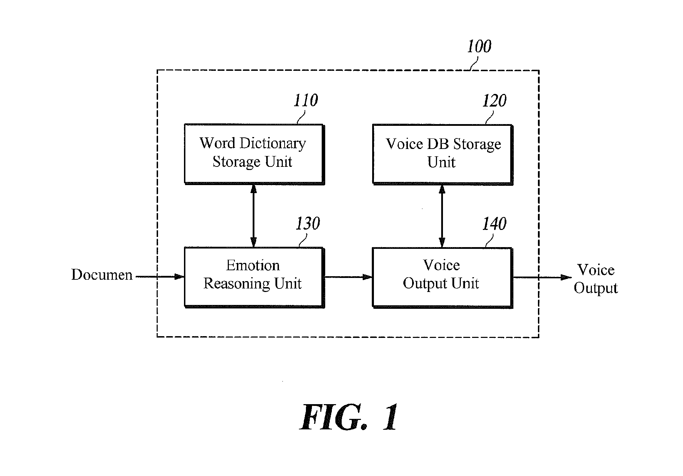

FIG. 1 is a schematic diagram of an emotional voice synthesis apparatus according to at least one embodiment of the present disclosure. Referring to FIG. 1, the emotional voice synthesis apparatus 100 according to at least one embodiment of the present disclosure includes a word dictionary storage unit 110, a voice DB storage unit 120, an emotion reasoning unit 130, and a voice output unit 140. The emotional voice synthesis apparatus 100 may be implemented with a server that provides an emotional voice synthesis service while transmitting/receiving data to/from a user communication terminal (not shown), such as a computer or a smartphone, via a network (not shown), or may be implemented with an electronic device that includes the respective elements described above. In addition, in a case where the emotional voice synthesis apparatus 100 is implemented in a server form, the respective elements described above may be implemented with individual servers to interact with one another, or may be installed in a single server to interact with one other.

The word dictionary storage unit 110 stores emotional words in an emotional word dictionary after classifying the emotional words into items each containing at least one of an emotion class, a similarity, a positive or negative valence, and a sentiment strength. Emotion is defined as a state of feeling that results in stimulus or stimulus change. Emotion is dependent on psychological factors such as surprise, fear, hatred, anger, pleasure, happiness, and sadness. By the way, individuals may feel different emotions to the same stimulus, and the sentiment strength may also be different. In consideration of such states, the word dictionary storage unit 110 classifies the emotional words such as "happy", "ashamed" and "dejected" into respective emotion classes, classifies the classified emotion classes, based on the similarity, the positive or negative valence, and the sentiment strength, and stores the emotional words in the emotional word dictionary. The emotion classes are the classification of human's internal feeling states such as satisfaction, longing, and happiness.

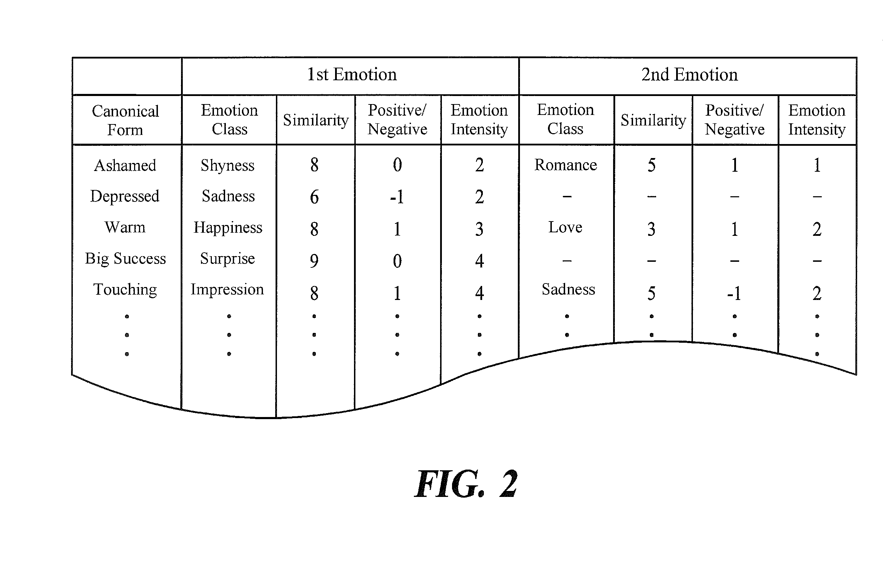

In at least one embodiment of the present disclosure, the emotional words are classified into a total of seventy-seven emotion classes and may be matched with the relevant emotion classes. The number of the emotion classes is merely an example of kinds of classifiable emotions and is not limited thereto. The similarity represents a similarity between the relevant word and the item of the emotion class and may be expressed as a value within a predetermined range. The positive or negative valence is a level that represents whether the attribute of the relevant word is a positive emotion or a negative emotion and may be expressed as a positive value or a negative value within a predetermined range with zero as a reference value. The sentiment strength represents the strength of emotion among the attributes of the relevant word and may be expressed as a value within a predetermined range. FIG. 2 is a diagram of an example of the emotional word dictionary according to at least one embodiment of the present disclosure. In FIG. 2, the similarity was expressed as a value within a range of 0 to 10, the positive or negative valence was expressed as a value of 0, 1 or -1, and the sentiment strength was expressed as a value within a range of 0 to 10. However, these values are not limited to the shown ranges and various modifications can be made thereto. For example, the positive or negative valence may be expressed as a value of unit of 0.1 within a range of -1 to 1, and the similarity or the sentiment strength may also be expressed as a value of unit of 0.1 within a range of 0 to 1. In addition, the word dictionary storage unit110 may classify the same word into a plurality of emotion classes, just like "ashamed", "warm", and "touching". In this case, each of the classified emotion classes may be classified based on at least one of the similarity, the positive or negative valence, and the sentiment strength and then stored in the emotional word dictionary. Moreover, even in the case of the same emotional word, at least one of the emotion class, the similarity, the positive or negative valence, and the sentiment strength may be differently recognized according to environment information containing at least one of an input time of a sentence logged by a user, a place, and a weather. Additionally, the emotion class, the similarity, the positive or negative valence, and the sentiment strength may vary according to profile information containing a user's gender, age, character, and occupation. In a case where at least one of the emotion class, the similarity, the positive or negative valence, and the sentiment strength is differently inferred, an emotional word dictionary of each user may be set and stored based on emotion log information of each user.

The voice DB storage unit 120 stores voices in a database after classifying the voices according to at least one of an emotion class, a similarity, a positive or negative valence, and a sentiment strength in correspondence to the emotional words stored in the word dictionary storage unit 110. In this case, the voice DB storage unit 120 may store voice prosody in the database after classifying the voice prosody according to at least one of the emotion class, the similarity, the positive or negative valence, and the sentiment strength in correspondence to the emotional words. That is, even with respect to the same emotional word, the voice DB storage unit 120 may store voice prosody in the database after classifying the voice prosody differently according to at least one of the emotion class, the similarity, the positive or negative valence, and the sentiment strength. The prosody refers to an intonation or an accent except for phonological information representing speech content in the voice, and may be controlled by loudness (energy), pitch (frequency), and length (duration) of sound.

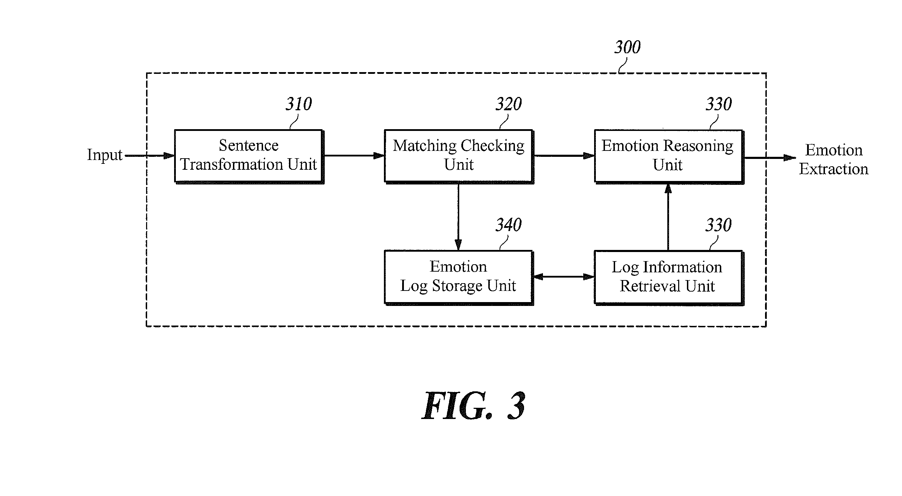

The emotion reasoning unit 130 infers an emotion matched with the emotional word dictionary with respect to at least one of each word, phrase, and sentence of a document such as a text or an e-book. In other words, the emotion reasoning unit 130 infers an emotion matched with the emotional word dictionary from each word, phrase, and sentence within a document file created by a text editor or a digital book recorded in electronic media and thus available like a book. The emotion reasoning unit 130 may also be implemented with an emotion reasoning module 300 as shown in FIG. 3.

FIG. 3 is a schematic diagram of a configuration of the emotion reasoning module of FIG. 1. The following description will be made on the assumption that the emotion reasoning module 300 is used as the emotion reasoning unit 130 of the emotional voice synthesis apparatus 100.

Referring to FIG. 3, the emotion reasoning module 300 may include a sentence transformation unit 310, a matching checking unit 320, an emotion reasoning unit 330, an emotion log storage unit 340, and a log information retrieval unit 350.

The sentence transformation unit 310 parses words and phrases with respect to each word, phrase, and sentence of the document such as the text or the e-book, and transforms the parsed words and phrases into canonical forms. In other words, the sentence transformation unit 310 may primarily segment a set document into a plurality of words. The sentence transformation unit 310 may parse the phrases on the basis of idiomatically used words or word combinations among the segmented words and then transform the parsed phrases into the canonical forms.

The matching checking unit 320 compares the respective words and phrases transformed by the sentence transformation unit 310 with the emotional word dictionary stored in the word dictionary storage unit 110, and checks the matched words or phrases.

The emotion reasoning unit 330 may apply a probabilistic model based on co-occurrence of the transformed words and phrases, and infer the emotion based on the applied probabilistic model. For example, when assuming that the word "overwhelmed" among the words transformed into the canonical form by the sentence transformation unit 310 is matched with the emotion class "touching" of the emotional word dictionary, the emotion reasoning unit 330 may apply the probabilistic model based on a combination of the word "overwhelmed" and another word or phrase transformed into the canonical form and then infer the emotion based on the applied probabilistic model. The probabilistic model is an algorithm for calculating a probability of belonging to a particular emotion by using the frequency of a particular word or phrase in an entire corpus. Based on the probabilistic model, a probability that a new word will belong to a particular emotion can be calculated. For example, as expressed in Equation 1 below, the emotion similarity to the new word can be inferred by calculating the frequency of the combination of the new word (W) and the particular emotion (C) in the sentence within the corpus with respect to the total frequency of the new word (W) within the corpus.

$$r : L(G)R \rightarrow P \hspace{6cm} \text{Equation 1}$$

In Equation 1 above, the rule r means that a grapheme string set G satisfying a left context L and a right context R is converted into a phoneme string set P. In this case, the lengths of L and R are variable, and G and P are sets composed of grapheme or symbol "-".

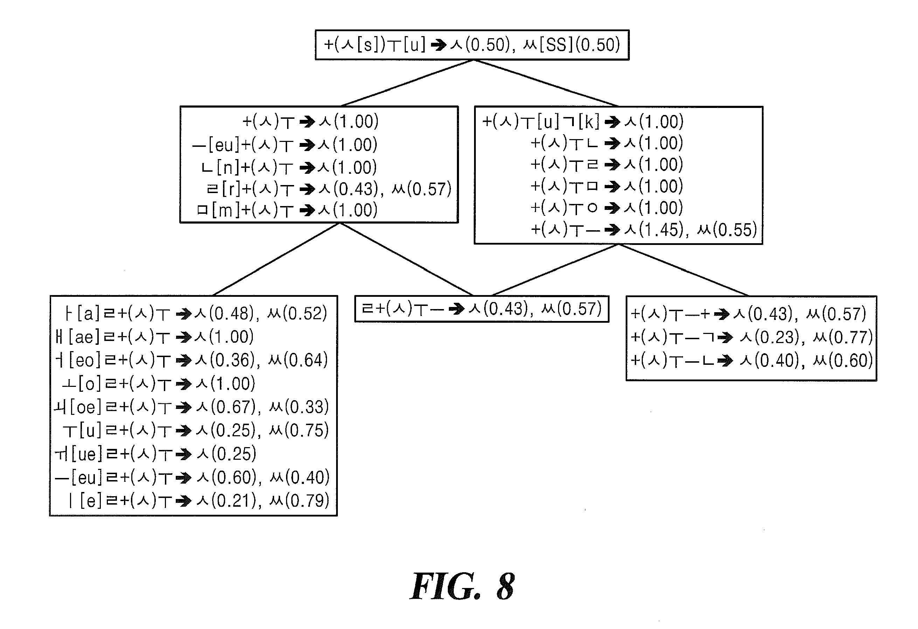

The rule r may have at least one candidate phoneme string $p \in P$, which is calculated using a realization probability as expressed in Equation 2 below and stored in a rule tree of FIG. 8. In FIG. 8, symbols "*" and "+" mean a sentence break and a word/phrase break, respectively.
$$\Pr(p \mid L(G)R) = \frac{Count(L(G)R \to p \in P)}{Count(L(G)R \to P)} \qquad \text{Equation 2}$$

The phoneme string is generated by selecting a candidate having the highest cumulative score in the candidate phoneme string p, based on the generated rule tree. The cumulative score is calculated as expressed in Equation 3 below.
$$Score(p \mid L(G)R) = \sum w_{CL} \Pr(p \mid L'(G)R') \qquad \text{Equation 3}$$

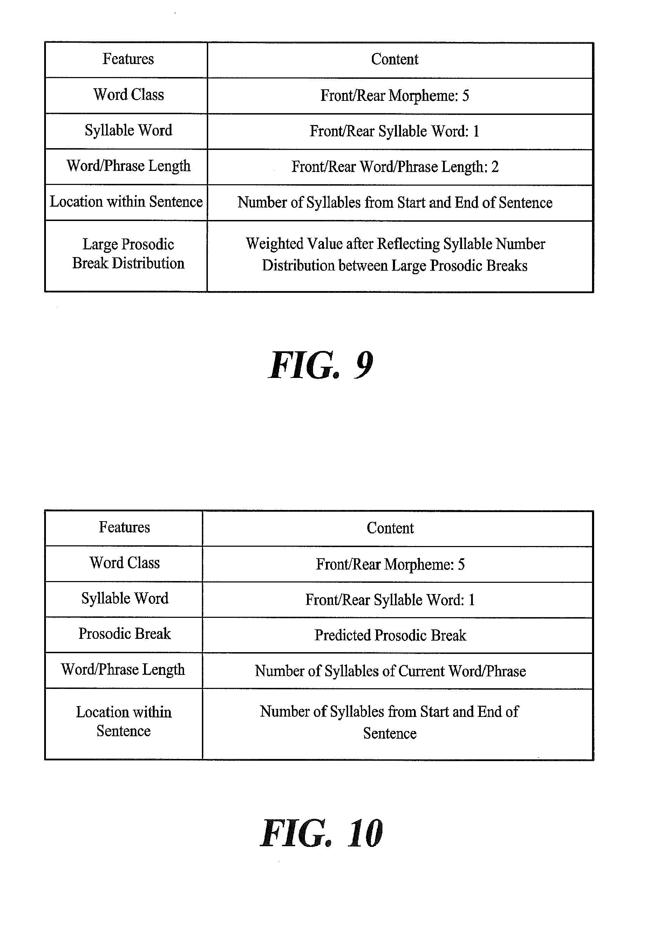

In Equation 3 above, $W_{CL}$ is a weighted value depending on the lengths of the left and right contexts L' and R', and L' and R' are contexts included in L and R, respectively. That is, the rule L'(G)R' → P is a parent rule of L(G)R -> P or corresponds to its own self.
In order for prosody modeling, Korean Tones and Break Indices (TOBI), a prosodic transcription convention for standard Korean, may be used. In the Korean TOBI, there are various tones and break indices. However, in at least one embodiment of the present disclosure, the tones and break indices are simplified. Therefore, only four break tones (L%, H%, HL%, LH%) of an intonational phrase, two break tones (La, Ha) of an accentual phrase, and three prosodic breaks (B0-no break, B2-small prosodic break, B3-large prosodic break) may be used.
The prosodic break forms a prosodic structure of a sentence. Hence, if incorrectly predicted, the meaning of the original sentence may be changed. For this reason, the prosodic break is important to the TTS system. In at least one embodiment of the present disclosure, hidden Markov models (HMM), classification and regression trees (CART), and stacked sequential learning (SSL) using maximum entropy (ME) as a basic learning method may be used to predict the prosodic break. Features used for the prosodic break prediction are shown in FIG. 9.
A read voice and a dialogic voice show the greatest difference in a tone. In the dialogic style, even the same sentence may be pronounced in various tones. However, it is difficult to predict an entire pitch curve in order to reflect various tones. Even though the pitch curve is well predicted, a corpus-based TTS system has a limitation in that synthesis unit corresponding to a predicted pitch is deficient. In at least one embodiment of the present disclosure, the tone may be predicted with respect to only the last syllable of the predicted prosodic break, based on the fact that various changes in the tone of the dialogic style mainly occur in the last syllable of the prosodic break. The tone prediction was performed using conditional random fields (CRF), and the features used therein are shown in FIG. 10.
The pronunciation and prosody prediction method as described above is merely exemplary, and the pronunciation and prosody prediction methods usable in at least one embodiment of the present disclosure are not limited thereto.

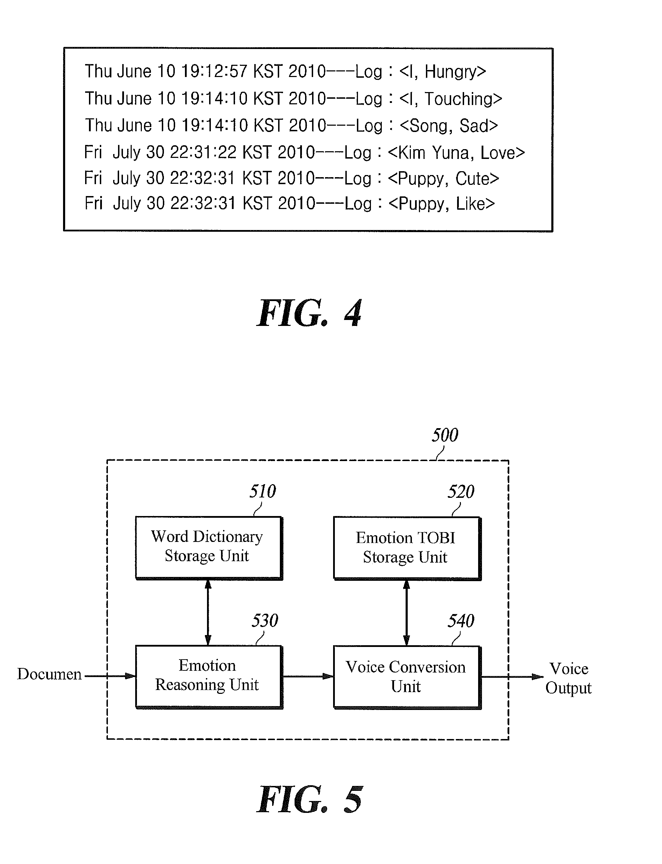

FIG. 5 is a schematic diagram of an emotional voice synthesis apparatus 500 according to another embodiment of the present disclosure. Referring to FIG. 5, a voice conversion unit 540 converts a document into a voice signal, based on an emotion TOBI corresponding to an inferred emotion. In other words, the voice conversion unit 540 extracts an emotion TOBI stored in an emotion TOBI storage unit 520 according to an emotion rinferred by an emotion reasoning unit 530, and converts a document into a voice signal according to the extracted emotion TOBI.
Therefore, the emotional voice synthesis apparatus 500 according to the another embodiment of the present disclosure may store a variety of emotion TOBI corresponding to emotional words in the database, extract the emotion TOBI from the database according to the emotion inferred from the document, and convert the document into the voice signal based on the extracted emotion TOBI. By outputting the converted voice signal, the emotion may be expressed while synthesizing with the voice corresponding to the document.

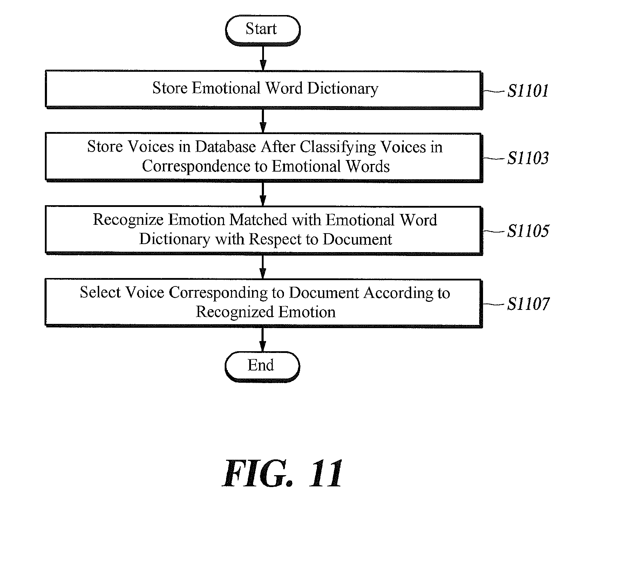

FIG. 11 is a flowchart of an emotional voice synthesis method performed by the emotional voice synthesis apparatus of FIG. 1 according to at least one embodiment of the present disclosure.
Referring to FIGs. 1 and 11, the word dictionary storage unit 110 stores emotional words in the emotional word dictionary after classifying the emotional words into items each containing at least one of the emotion class, the similarity, the positive or negative valence, and the sentiment strength (S1101). In addition, the voice DB storage unit 120 stores voices in the database after classifying the voices according to at least one of the emotion class, the similarity, the positive or negative valence, and the sentiment strength in correspondence to the emotional words stored in the word dictionary storage unit 110 (S1103). In this case, the voice DB storage unit 120 can store voice prosody in the database after classifying the voice prosody according to at least one of the emotion class, the similarity, the positive or negative valence, and the sentiment strength in correspondence to the emotional words. In other words, even with respect to the same emotional word, the voice DB storage unit 120 can store voice prosody in the database after classifying the voice prosody differently according to at least one of the emotion class, the similarity, the positive or negative valence, and the sentiment strength.

The emotion reasoning unit 130 infers an emotion matched with the emotional word dictionary with respect to at least one of each word, phrase, and sentence of the document including a text and an e-book (S1105). In other words, the emotion reasoning unit 130 infers an emotion matched with the emotional word dictionary from each word, phrase, and sentence within a document file created by a text editor or a digital book recorded in electronic media and thus available like a book.

The voice output unit 140 selects and outputs the voice corresponding to the document from the database stored in the voice DB storage unit 120 according to the inferred emotion (S1107). In other words, the voice output unit 140 selects and outputs the emotional voice matched with the emotion inferred by the emotion reasoning unit 130 from the database stored in the voice DB storage unit 120.

Therefore, the emotional voice synthesis apparatus 100 according to the at least one embodiment of the present disclosure may store voices having various prosodies corresponding to the emotional words in the database, and select and output the corresponding voice from the database according to the emotion inferred from the document. In this way, the emotion may be expressed while synthesizing with the voice corresponding to the document.

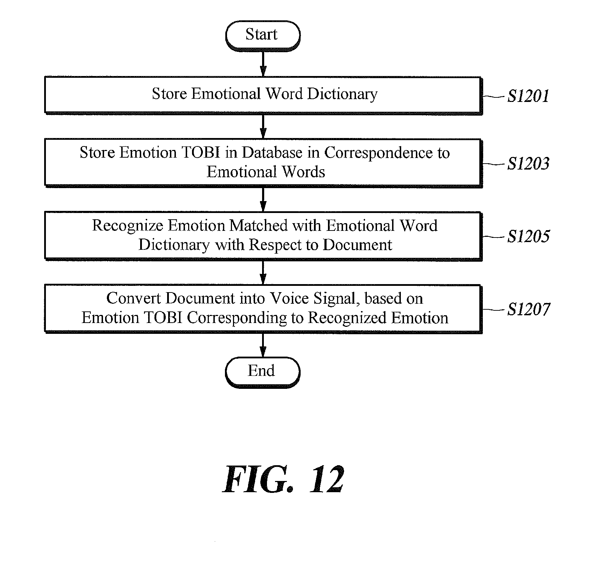

FIG. 12 is a flowchart of an emotional voice synthesis method performed by the emotional voice synthesis apparatus of FIG. 5.

Referring to FIGs. 5 and 12, the word dictionary storage unit 110 stores emotional words in the emotional word dictionary after classifying the emotional words into items each containing at least one of the emotion class, the similarity, the positive or negative valence, and the sentiment strength (S1201). In addition, the emotion TOBI storage unit 520 stores emotion TOBI in the database in correspondence to at least one of the emotion class, the similarity, the positive or negative valence, and the sentiment strength of the emotional words (S1203).

The emotion reasoning unit 530 infers an emotion matched with the emotional word dictionary with respect to at least one of each word, phrase, and sentence of the document including a text and an e-book (S1205). In other words, the emotion reasoning unit 530 infers an emotion matched with the emotional word dictionary from each word, phrase, and sentence within a document file created by a text editor or a digital book recorded in electronic media and thus available like a book.

The voice conversion unit 540 converts the document into the voice signal, based on the emotion TOBI corresponding to the inferred emotion (S1207). In other words, the voice conversion unit 540 extracts an emotion TOBI stored in the emotion TOBI storage unit 520 according to the emotion inferred by the emotion reasoning unit 530, and converts the document into the voice signal according to the extracted emotion TOBI.

Therefore, the emotional voice synthesis apparatus 500 according to the another embodiment of the present disclosure may store a variety of emotion TOBI corresponding to emotional words in the database, extract the emotion TOBI from the database according to the emotion inferred from the document, and convert the document into the voice signal based on the extracted emotion TOBI. By outputting the converted voice signal, the emotion may be expressed while synthesizing with the voice corresponding to the document.

In the description above, although all of the components of the embodiments of the present disclosure may have been explained as assembled or operatively connected as a unit, one of ordinary skill would understand the present disclosure is not limited to such embodiments. Rather, within some embodiments of the present disclosure, the respective components are selectively and operatively combined in any number of ways. Every one of the components are capable of being implemented alone in hardware or combined in part or as a whole and implemented in a computer program having program modules residing in computer readable media and causing a processor or microprocessor to execute functions of the hardware equivalents. Codes or code segments to constitute such a program are understood by a person skilled in the art. The computer program is stored in a non-transitory computer readable media, which in operation realizes the embodiments of the present disclosure. The computer readable media includes magnetic recording media, optical recording media or carrier wave media, in some embodiments.

In addition, one of ordinary skill would understand terms like 'include', 'comprise', and 'have' to be interpreted in default as inclusive or open rather than exclusive or closed unless expressly defined to the contrary. All the terms that are technical, scientific or otherwise agree with the meanings as understood by a person skilled in the art unless defined to the contrary. One of ordinary skill would understand common terms as found in dictionaries are interpreted in the context of the related technical writings not too ideally or impractically unless the present disclosure expressly defines them so.

Although exemplary embodiments of the present disclosure have been described for illustrative purposes, those skilled in the art will appreciate that various modifications, additions and substitutions are possible, without departing from the essential characteristics of the disclosure. Therefore, exemplary embodiments of the present disclosure have been described for the sake of brevity and clarity. Accordingly, one of ordinary skill would understand the scope of the disclosure is not limited by the explicitly described above embodiments but by the claims and equivalents thereof.

CROSS-REFERENCE TO RELATED APPLICATION

If applicable, this application claims priority under 35 U.S.C §119(a) of Patent Application No. 10-2010-0106317, filed on October 28, 2010 in Korea, the entire content of which is incorporated herein by reference. In addition, this non-provisional application claims priority in countries, other than the U.S., with the same reason based on the Korean Patent Application, the entire content of which is hereby incorporated by reference.

**Claims**

1.   An emotional voice synthesis apparatus, comprising:

   a word dictionary storage unit configured to store emotional words in an emotional word dictionary after classifying the emotional words into items each containing at least one of an emotion class, a similarity, a positive or negative valence, and a sentiment strength;
   a voice DB storage unit configured to store voices in a database after classifying the voices according to at least one of the emotion class, the similarity, the positive or negative valence, and the sentiment strength in correspondence to the emotional words;
   an emotion reasoning unit configured to infer an emotion matched with the emotional word dictionary with respect to at least one of each word, phrase, and sentence of a document including a text and an e-book; and
   a voice output unit configured to select and output a voice corresponding to the document from the database according to the inferred emotion.

2.   The emotional voice synthesis apparatus of claim 1, wherein the voice DB storage unit is configured to store voice prosody in the database after classifying the voice prosody according to at least one of the emotion class, the similarity, the positive or negative valence, and the sentiment strength in correspondence to the emotional words.

3.   An emotional voice synthesis apparatus, comprising:

   a word dictionary storage unit configured to store emotional words in an emotional word dictionary after classifying the emotional words into items each containing at least one of an emotion class, a similarity, a positive or negative valence, and a sentiment strength;
   an emotion TOBI storage unit configured to store emotion tones and break indices (TOBI) in a database in correspondence to at least one of the emotion class, the similarity, the positive or negative valence, and the sentiment strength of the emotional words;
   an emotion reasoning unit configured to infer an emotion matched with the emotional word dictionary with respect to at least one of each word, phrase, and sentence of a document including a text and an e-book; and
   a voice conversion unit configured to convert the document into a voice signal, based on the emotion TOBI corresponding to the inferred emotion.

4.   The emotional voice synthesis apparatus of claim 3, wherein the voice conversion unit is configured to predict a prosodic break by using at least one of hidden Markov models (HMM), classification and regression trees (CART), and stacked sequential learning (SSL).

5.   An emotional voice synthesis method, comprising:

   storing emotional words in an emotional word dictionary after classifying the emotional words into items each containing at least one of an emotion class, a similarity, a positive or negative valence, and a sentiment strength;
   storing voices in a database after classifying the voices according to at least one of the emotion class, the similarity, the positive or negative valence, and the sentiment strength in correspondence to the emotional words;
   recognizing an emotion matched with the emotional word dictionary with respect to at least one of each word, phrase, and sentence of a document including a text and an e-book; and
   selecting and outputting a voice corresponding to the document from the database according to the inferred emotion.

6. The emotional voice synthesis method of claim 5, wherein the storing of the voices in the database comprises storing voice prosody in the database after classifying the voice prosody according to at least one of the emotion class, the similarity, the positive or negative valence, and the sentiment strength in correspondence to the emotional words.

7. An emotional voice synthesis method, comprising:

storing emotional words in an emotional word dictionary after classifying the emotional words into items each containing at least one of an emotion class, a similarity, a positive or negative valence, and a sentiment strength;
storing emotion tones and break indices (TOBI) in a database in correspondence to at least one of the emotion class, the similarity, the positive or negative valence, and the sentiment strength of the emotional words;
recognizing an emotion matched with the emotional word dictionary with respect to at least one of each word, phrase, and sentence of a document including a text and an e-book; and
converting the document into a voice signal, based on the emotion TOBI corresponding to the inferred emotion.

8. The emotional voice synthesis method of claim 7, wherein the converting the document into the voice signal comprises predicting a prosodic break by using at least one of hidden Markov models (HMM), classification and regression trees (CART), and stacked sequential learning (SSL).

*100*

*110*

*120*

Word Dictionary
Storage Unit

Voice DB Storage
Unit

*130*

*140*

Documen →

Emotion
Reasoning Unit

Voice
Output Unit

→ Voice
Output

# FIG. 1

| | 1st Emotion | | | | 2nd Emotion | | | |
|---|---|---|---|---|---|---|---|---|
| Canonical Form | Emotion Class | Similarity | Positive/ Negative | Emotion Intensity | Emotion Class | Similarity | Positive/ Negative | Emotion Intensity |
| Ashamed | Shyness | 8 | 0 | 2 | Romance | 5 | 1 | 1 |
| Depressed | Sadness | 6 | -1 | 2 | – | – | – | – |
| Warm | Happiness | 8 | 1 | 3 | Love | 3 | 1 | 2 |
| Big Success | Surprise | 9 | 0 | 4 | – | – | – | – |
| Touching | Impression | 8 | 1 | 4 | Sadness | 5 | -1 | 2 |
| ⋮ | ⋮ | ⋮ | ⋮ | ⋮ | ⋮ | ⋮ | ⋮ | ⋮ |

## FIG. 2

EP 2 634 714 A2

EP 2 634 714 A2

*300*

| Input → | Sentence Transformation Unit *310* | → | Matching Checking Unit *320* | → | Emotion Reasoning Unit *330* | → Emotion Extraction |

Emotion Log Storage Unit *340* ↔ Log Information Retrieval Unit *330*

**FIG. 3**

Thu June 10 19:12:57 KST 2010---Log : <I, Hungry>
Thu June 10 19:14:10 KST 2010---Log : <I, Touching>
Thu June 10 19:14:10 KST 2010---Log : <Song, Sad>
Fri  July 30 22:31:22 KST 2010---Log : <Kim Yuna, Love>
Fri  July 30 22:32:31 KST 2010---Log : <Puppy, Cute>
Fri  July 30 22:32:31 KST 2010---Log : <Puppy, Like>

# FIG. 4

*500*

*510* Word Dictionary Storage Unit

*520* Emotion TOBI Storage Unit

*530* Emotion Reasoning Unit

*540* Voice Conversion Unit

Documen →

→ Voice Output

# FIG. 5

```
                                                    ┌─────────────────┐
                                                    │ Character Input │
                                                    └────────┬────────┘
                                                             │
                                                             ▼
                                                    ┌─────────────────┐
                                                    │    Character    │
                                                    │  Preprocessor   │
                                                    └────────┬────────┘
       ╭─────────────╮                                       │
       │  Voice DB   │                          ┌────────────┴────────────┐
       ╰──────┬──────╯                          ▼                         ▼
              │                        ┌──────────────────┐    ┌──────────────────┐
              │      ╭──────────────╮  │   Pronunciation  │    │   Word Class     │
  Transcription      │ Pronunciation│  │    Prediction    │    │     Tagger       │
──────────────────▶ │Prediction Model├ ┤ │                  │   └────────┬─────────┘
                     ╰──────────────╯  └──────────────────┘             │
                                                 │                       ▼
                     ╭──────────────╮            │            ┌──────────────────┐
       TOBI          │Prosody Predic│            │            │    Prosody       │
──────────────────▶ │   tion Model  ├ ─ ─ ─ ─ ─ ─ ─ ─ ─ ─ ─ ▶ │   Prediction     │
                     ╰──────────────╯            │            └──────────────────┘
    Sound Pitch                                  │
    Sound Length                                 │
    Sound Loudness                               │
       MFCC                                      ▼
 TOBI, Transcription ╭──────────────╮  ┌──────────────────┐
──────────────────▶ │Synthesis Unit ├ ─ ─ ─ ─ ─ ▶│  Synthesis Unit │
                     │      DB       │            │    Selection     │
                     ╰──────────────╯            └────────┬─────────┘
                                                          │
                                                          ▼
                                                 ┌──────────────────┐
                                                 │  Output Voice    │
                                                 └──────────────────┘
```

## FIG. 6

| | | | |
|---|---|---|---|
| Grapheme string | ㄴ(n) ㅗ(o) ㅎ(h) | ㅇ(o) ㅏ(a) ㅆ(ss) | ㄷ(d) ㅏ(a) ㅡ(eu) |
| | ㅣ(e) ㅣ(e) ㅣ(e) | ㅣ(e) ㅣ(e) ㅣ(e) | ㅣ(e) ㅣ(e) ㅣ(e) |
| Phoneme string | ㄴ(n) ㅗ(o) ㅡ(eu) | ㅡ(eu) ㅏ(a) ㄷ(d) | ㄸ(dd) ㅏ(a) ㅡ(eu) |

## FIG. 7

+(ㅅ[s])ㅜ[u] ↗ ㅅ(0.50), ㅁ[SS](0.50)

+(ㅅ)ㅜ[u]ㄱ[k] ↑ ㅅ(1.00)
+(ㅅ)ㅜㄴ ↑ ㅅ(1.00)
+(ㅅ)ㅜㄹ ↑ ㅅ(1.00)
+(ㅅ)ㅜㅁ ↑ ㅅ(1.00)
+(ㅅ)ㅜㅇ ↑ ㅅ(1.00)
+(ㅅ)ㅜ— ↑ ㅅ(1.45), ㅁ(0.55)

+(ㅅ)ㅜ—+ ↑ ↑ ㅅ(0.43), ㅁ(0.57)
+(ㅅ)ㅜ—ㄱ ↑ ↑ ㅅ(0.23), ㅁ(0.77)
+(ㅅ)ㅜ—ㄴ ↑ ↑ ㅅ(0.40), ㅁ(0.60)

ㄹ+(ㅅ)ㅜ— ↑ ㅅ(0.43), ㅁ(0.57)

+(ㅅ)ㅜ ↑ ↑ ㅅ(1.00)
—[eu]+(ㅅ)ㅜ ↑ ↑ ㅅ(1.00)
ㄴ[n]+(ㅅ)ㅜ ↑ ↑ ㅅ(1.00)
ㄹ[r]+(ㅅ)ㅜ ↑ ↑ ㅅ(0.43), ㅁ(0.57)
ㅁ[m]+(ㅅ)ㅜ ↑ ↑ ㅅ(1.00)

ㅏ[a]ㄹ+(ㅅ)ㅜ ↑ ↑ ㅅ(0.48), ㅁ(0.52)
ㅐ[ae]ㄹ+(ㅅ)ㅜ ↑ ↑ ㅅ(1.00)
ㅕ[eo]ㄹ+(ㅅ)ㅜ ↑ ↑ ㅅ(0.36), ㅁ(0.64)
ㅗ[o]ㄹ+(ㅅ)ㅜ ↑ ↑ ㅅ(1.00)
ㅚ[oe]ㄹ+(ㅅ)ㅜ ↑ ↑ ㅅ(0.67), ㅁ(0.33)
ㅜ[u]ㄹ+(ㅅ)ㅜ ↑ ↑ ㅅ(0.25), ㅁ(0.75)
ㅟ[ue]ㄹ+(ㅅ)ㅜ ↑ ↑ ㅅ(0.25)
—[eu]ㄹ+(ㅅ)ㅜ ↑ ↑ ㅅ(0.60), ㅁ(0.40)
ㅣ[e]ㄹ+(ㅅ)ㅜ ↑ ↑ ㅅ(0.21), ㅁ(0.79)

*FIG. 8*

| Features | Content |
|---|---|
| Word Class | Front/Rear Morpheme: 5 |
| Syllable Word | Front/Rear Syllable Word: 1 |
| Word/Phrase Length | Front/Rear Word/Phrase Length: 2 |
| Location within Sentence | Number of Syllables from Start and End of Sentence |
| Large Prosodic Break Distribution | Weighted Value after Reflecting Syllable Number Distribution between Large Prosodic Breaks |

# FIG. 9

| Features | Content |
|---|---|
| Word Class | Front/Rear Morpheme: 5 |
| Syllable Word | Front/Rear Syllable Word: 1 |
| Prosodic Break | Predicted Prosodic Break |
| Word/Phrase Length | Number of Syllables of Current Word/Phrase |
| Location within Sentence | Number of Syllables from Start and End of Sentence |

# FIG. 10

```
                          ┌─────────────┐
                          │    Start    │
                          └──────┬──────┘
                                 │
         ┌───────────────────────▼───────────────────────┐
         │        Store Emotional Word Dictionary         │── S1101
         └───────────────────────┬───────────────────────┘
                                 │
         ┌───────────────────────▼───────────────────────┐
         │  Store Voices in Database After Classifying Voices in │── S1103
         │      Correspondence to Emotional Words         │
         └───────────────────────┬───────────────────────┘
                                 │
         ┌───────────────────────▼───────────────────────┐
         │  Recognize Emotion Matched with Emotional Word │── S1105
         │      Dictionary with Respect to Document        │
         └───────────────────────┬───────────────────────┘
                                 │
         ┌───────────────────────▼───────────────────────┐
         │  Select Voice Corresponding to Document According to │── S1107
         │             Recognized Emotion                 │
         └───────────────────────┬───────────────────────┘
                                 │
                          ┌──────▼──────┐
                          │     End     │
                          └─────────────┘
```

# FIG. 11

Start

| Store Emotional Word Dictionary | S1201 |

| Store Emotion TOBI in Database in Correspondence to Emotional Words | S1203 |

| Recognize Emotion Matched with Emotional Word Dictionary with Respect to Document | S1205 |

| Convert Document into Voice Signal, based on Emotion TOBI Corresponding to Recognized Emotion | S1207 |

End

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100106317